# FASCICULE DE BREVET EUROPEEN

(11) **EP 0 559 537 B1**
(45) Date de publication et mention de la délivrance du brevet: **04.12.1996**
(21) Numéro de dépôt: 93400512.5
(22) Date de dépôt: 01.03.1993
(51) Int. Cl.: G21C 19/46, C22B 3/00, C22B 11/02

(54) **Procédé pour séparer certains éléments à partir de solutions aqueuses issues du retraitement des combustibles nucléaires usés**
Verfahren zur Trennung von Elementen aus wässrigen Lösungen entstehend bei der Wiederaufarbeitung von Kernbrennstoffen
Process for the separation of elements from aqueous solutions coming from the reprocessing of nuclear fuel

(30) Priorité: 03.03.1992 FR 9202516
(43) Date de publication de la demande: 08.09.1993
(73) Titulaire: COMPAGNIE GENERALE DES MATIERES NUCLEAIRES (COGEMA), F-78141 Velizy-Villacoublay Cédex (FR)
(72) Inventeur: Lemaire, Marc, F-69100 Villeurbanne (FR); Foos, Jacques, F-91400 Orsay (FR); Guy, Alain, F-77135 Pontcarre (FR); Draye, Micheline, F-69003 Lyon (FR); Chomel, Rodolph, F-84850 Camaret/Aigues (FR); Chevillotte, René, F-30150 Sauveterre (FR)
(74) Mandataire: Des Termes, Monique

(56) Documents cités:
- FR-A- 2 370 498
- US-A- 3 725 261
- DATABASE WPIL Section Ch, Week 8409, Derwent Publications Ltd., London, GB; Class A91, AN 84-053224 & JP-A-5 912 735
- DATABASE WPIL Section Ch, Week 8233, Derwent Publications Ltd., London, GB; Class A97, AN 82-69294E & JP-A-57 111 244
- FREZENIUS ZEITSCRIFT FüR ANALYTISCHE CHEMIE SPRINGER VERLAG 1968, BERLIN pages 432 - 440 FRIEDRICH WOLF ,RüDIGER HAUPTMANN UND DIETER WARNECKE 'SYNTHESE UND METALLION-SELEKTIVITäT VON 4-VINYLPYRIDIN/ACRYLNITRIL BZW. ACRYLSäURE/P- DIVINYLBENZOL-COPOLYMEREN'

## Description

La présente invention a pour objet un procédé de séparation d'au moins un élément tel que Nb, Sb, Ce+Pr, les actinides et les éléments des groupes VIIb (Mn, Tc, Re) et VIII (Fe, Co, Ni, Ru, Rh, Pd, Os, Ir, Pt) de la Classification Périodique des Eléments présents dans une solution aqueuse issue du retraitement des combustibles nucléaires usés.

Elle s'applique en particulier à la récupération de ces éléments dans les effluents aqueux de faible activité, de moyenne activité ou de haute activité, ainsi que dans les concentrats de produits de fission et les solutions de dissolution de combustibles nucléaires usés. Elle s'applique également à la décontamination des effluents à forte teneur en sels des stations de traitement d'effluents actuelles.

L'irradiation des combustibles nucléaires dans les réacteurs de puissance, conduit à la production de nombreux produits de fission dont les masses atomiques vont de 70 à 160. Ces produits de fission se retrouvent dans les différentes solutions et effluents produits à la fin du cycle du combustible.

Ainsi, les effluents de faible activité, c'est-à-dire dont l'activité spécifique β ne dépasse pas 0,37GBq/m³ (ou 10⁻²Ci/m³) pour les éléments autres que ¹³⁷Cs et ⁹⁰Sr, contiennent généralement du manganèse, de l'antimoine, du ruthénium, du césium et du cobalt radioactifs ; les effluents de moyenne activité dont l'activité spécifique β se situe entre 0,37 et 37GBq/m³ (ou entre 10⁻² et 1Ci/m³), contiennent par exemple du manganèse, du ruthénium, du cobalt, du césium, du cérium, et du praséodyme radioactifs ; les effluents de haute activité, c'est-à-dire dont l'activité spécifique β se situe entre 37GBq/m³ et 1,8TBq/m³ (ou entre 1 et 50Ci/m³), peuvent comprendre du ruthénium, du césium, du cérium, du praséodyme, du niobium et de l'antimoine. Les effluents de moyenne et de haute activité ont par ailleurs une activité qui se situe entre 10⁻⁵ et 3.10⁻² mCi/l, due à la présence d'éléments tels que Pu, Am et Cm.

Les solutions de dissolution de combustibles nucléaires usés sont généralement des solutions nitriques qui comprennent des actinides, de nombreux métaux et pratiquement tous les produits de fission, en particulier du ruthénium 106, du césium 137 et 134, de l'antimoine 125, de l'europium 154, du cérium et du praséodyme 144.

Les concentrats de produits de fission, qui sont des solutions nitriques obtenues après séparation de l'uranium et du plutonium des solutions de dissolution des combustibles nucléaires usés, comprennent de nombreux éléments parmi lesquels on trouve en particulier du fer, du nickel, du molybdène, du cuivre, du ruthénium, du rhodium et du technétium.

Un des buts de l'invention est donc de séparer certains éléments présents dans ces effluents ou ces solutions. Parmi ces éléments, on trouve en particulier des métaux du groupe du platine tels que le palladium, le rhodium et le ruthénium, qui sont des éléments valorisables, notamment le rhodium en raison de son utilisation dans les pots catalytiques pour l'industrie automobile.

Aussi, il serait très intéressant de disposer de procédés permettant de séparer efficacement le ruthémium, le rhodium et le palladium.

Des procédés de séparation de ces métaux sont décrits par exemple par R.P.Bush dans Platinum Metals Rev., 1991, 35, 4, p. 202-208 ; par McDuffie dans ORML/TM-6654, 1979 ; par Hazelton et al dans PML-5758-UC-70, 1986, et par Mac Cragh dans USA-3 672 875.

Ces procédés connus qui concernent la séparation des métaux précieux à partir d'effluents ou de fines de dissolution, font appel à différentes techniques telles que l'extraction par des métaux liquides, la volatilisation dans le cas du ruthénium, l'extraction par des solvants organiques dans le cas du rhodium et du palladium, la précipitation, l'adsorption sur du charbon actif ou la réduction par des résines réductrices du type amine-borane pour former des dépôts de métaux nobles sur ces résines. Toutefois, les techniques décrites dans ces documents ne sont pas satisfaisantes, car elles sont difficiles à mettre en oeuvre, ou ne permettent pas de récupérer des quantités suffisantes de ces métaux.

En effet, il convient de noter que, dans les effluents ou les solutions aqueuses traitées, les teneurs en Nb, Sb et en métaux des groupes VIIb et VIII à récupérer sont très faibles par rapport à celles des autres éléments présents dans la solution, tels que l'uranium et le plutonium dans le cas des solutions de dissolution, et le sodium dans le cas de certains effluents aqueux.

La présente invention a précisément pour objet un procédé de séparation d'au moins un élément choisi parmi Nb, Sb, les actinides, Ce, Pr et les éléments du groupe VIIb et du groupe VIII, qui présente l'avantage d'être facile à mettre en oeuvre, de pouvoir s'appliquer à différents types d'effluents et de conduire à des rendements de récupération élevés.

Selon l'invention, le procédé de séparation d'au moins un élément choisi parmi Nb, Sb, les actinides sauf l'uranium, Ce+Pr et les éléments des groupes VIIb et VIII de la Classification Périodique des Eléments, présents dans une solution aqueuse issue du retraitement des combustibles nucléaires usés, consiste à mettre en contact ladite solution aqueuse avec une résine solide à base de polymère ou copolymère de vinylpyridine, et à séparer de ladite solution la résine ayant fixé l'un au moins desdits éléments.

Dans ce procédé, l'utilisation d'une résine solide à base de polymère ou copolymère de vinylpyridine est très avantageuse car cette résine a une très bonne affinité pour Nb, Sb, les actinides sauf l'uranium, Ce+Pr, et les éléments des groupes VIIb et VIII. De plus, ces résines ont une bonne stabilité thermique et une bonne résistance à l'oxydation et elles peuvent être utilisées en milieu acide, en particulier en milieu nitrique.

Par ailleurs, lorsque la résine de polyvinylpyridine devient moins efficace en raison d'une saturation par les éléments séparés, on peut régénérer celle-ci en la soumettant à un lavage par de l'eau, une solution acide, par exemple HNO₃ 0,1 à 4M, ou une solution alcaline, par exemple NH₄OH 0,1M.

Des polymères ou copolymères de vinylpyridine ont déjà été utilisés pour séparer des métaux à partir de solutions.

Ainsi, le document JP-A-59 012 735 décrit l'utilisation de polyvinylpyridine substituée et réticulée pour séparer l'uranium (IV) de l'uranium (VI).

Le document JP-A-57 111 244 décrit l'utilisation de polyvinylpyridine réticulée pour séparer l'uranium d'une liqueur de lixiviation de minerais d'uranium.

Le document Frezenius Zeitschrift für analytische Chemie, pages 432-440, 1968, décrit l'utilisation d'un copolymère de 4-vinylpyridine, d'acrylonitrile et de divinylbenzène pour l'adsorption d'ions métalliques.

Cependant aucun de ces documents ne concerne la séparation des éléments mentionnés ci-dessus pour le procédé de l'invention, à partir de solutions issues du retraitement des combustibles nucléaires usés, en vue de les décontaminer.

Les polymères de vinylpyridine utilisés peuvent être par exemple la poly-2-(vinylpyridine) ou la poly-4-(vinylpyridine).

Les copolymères de vinylpyridine utilisables sont par exemple les copolymères de vinylpyridine et de divinylbenzène.

De préférence, dans l'invention, on utilise la poly-4-(vinylpyridine) qui répond à la formule : 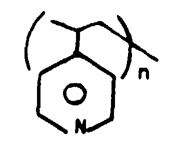 qui peut être réticulée par le divinylbenzène.

Cette résine qui est commercialisée généralement sous forme basique peut être utilisée en milieu acide sous forme saline, par exemple sous forme : 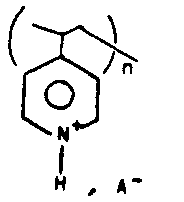 avec A⁻ représentant un anion tel que NO₃⁻ ou Cl⁻.

La résine se présente généralement sous la forme d'une poudre dont la granulométrie est choisie par l'utilisateur en fonction de ses besoins.

De préférence, on utilise la polyvinyl-4-pyridine réticulée ayant une granulométrie de 0,250 mm à 1 mm (15 à 60 mesh).

Elle est stable jusqu'à 260°C sous pression atmosphérique, elle résiste aux agents oxydants et réducteurs et elle n'est pas sensible à l'irradiation. En effet, après irradiation par une source de césium 137 produisant un débit de dose de 2Mrads/h, pendant 8h24min, la résine n'a subi aucune transformation décelable par analyse élémentaire, les teneurs en carbone, hydrogène et azote étant sensiblement les mêmes. On ne détecte pas davantage de modification par spectroscopie infrarouge et l'analyse par calorimétrie différentielle montre que l'aspect morphologique n'a subi aucun changement, la température de transition vitreuse étant inchangée. L'irradiation n'a donc pas d'effet ou que très peu d'effet sur la poly(vinylpyridine). Enfin, l'emploi de la poly(vinylpyridine) est avantageux car en modifiant certaines conditions de traitement, par exemple l'acidité nitrique, la durée de contact avec la solution, on peut la rendre sélective pour certains éléments.

Généralement, les solutions aqueuses de départ sont des solutions nitriques qui ont de préférence une concentration en acide nitrique allant de 10⁻⁷ à 4mol/l, et on les met en contact avec la résine solide pendant des durées allant de 1min à 24h.

Les quantités de résine utilisées dépendent en particulier des teneurs en éléments à extraire. Généralement, on utilise 10 à 500g de résine par litre de solution aqueuse.

Pour mettre en oeuvre le procédé de l'invention, on peut utiliser des dispositifs classiques de mise en contact de produits en poudre avec des liquides, de type discontinu en lots ou continu, tels que des colonnes d'échange à lit fixe ou à lit fluidisé.

Généralement, on opère à la pression et à la température ambiantes, mais dans certains cas on peut opérer à des pressions et températures différentes, par exemple pour accélérer la réaction.

Le procédé de l'invention peut être utilisé en particulier pour extraire le ruthénium, le rhodium et/ou le palladium de solutions aqueuses issues du retraitement des combustibles nucléaires usés.

Lorsqu'on veut extraire plus particulièrement le ruthénium, la concentration en acide nitrique de la solution aqueuse est au plus égale à 1mol/l, de préférence de 10⁻⁷ à 0,1mol/l et on effectue la mise en contact de cette solution avec la résine pendant une durée de 10 à 60min. On peut améliorer la cinétique d'extraction en ajoutant à la solution aqueuse des ions chlorures.

Dans le cas où l'on veut extraire plus particulièrement le rhodium et le palladium, la solution aqueuse a de préférence une concentration en acide nitrique de 1 à 2mol/l et on effectue la mise en contact de la solution avec la résine pendant une durée inférieure à 10min.

Comme on l'a vu plus haut, le procédé de l'invention peut être utilisé pour traiter divers types d'effluents et de solutions issus du retraitement de combustibles nucléaires usés.

Ainsi, il peut être utilisé
- pour séparer le ruthénium, le niobium, l'antimoine, le manganèse, le cobalt, le cérium, le praséodyme, le plutonium, le curium et l'américium, d'effluents de moyenne ou haute activité ;
- pour séparer Fe, Ni, Rh, Ru, Co et Tc des concentrats de produits de fission, et
- pour séparer Pd, Ru, Rh, Tc, Co, Ni et Fe des solutions de dissolution de combustibles irradiés.

D'autres caractéristiques et avantages de l'invention apparaîtront mieux à la lecture des exemples suivants donnés bien entendu à titre illustratif et non limitatif.

La figure 1 annexée est un diagramme représentant les variations du taux d'extraction du ruthénium (en %) en fonction du pH de la solution aqueuse de départ.
- Les figures 2 à 5 sont des diagrammes illustrant les pourcentages d'éléments réextraits en fonction du volume d'effluent traité.

Dans tous les exemples, on utilise une poudre de poly-4-(vinylpyridine) réticulée ayant une granulométrie d'environ 250 µm (60mesh).

### Exemple 1 : Séparation du ruthénium.

Dans cet exemple, on traite par le procédé de l'invention un effluent aqueux ayant une concentration en ruthénium de 0,49mg/l et une concentration en acide nitrique de 1,38mol/l.

Pour extraire le ruthénium présent dans cet effluent, on met en contact 40ml d'effluent avec 1g de résine de poly-4-(vinylpyridine) (PVP) sous agitation magnétique pendant une demi heure. On sépare alors la résine PVP sur un filtre de papier, on dose le ruthénium résiduel dans la solution par une torche à plasma "Perkin Elmer" type plasma 2000 et on détermine le taux d'extraction du ruthénium. Celui-ci est de 85% ce qui correspond à une fixation de 0,02mg de ruthénium par gramme de résine PVP.

Le rendement d'extraction du ruthénium est donc très satisfaisant.

### Exemple 2 : Séparation du ruthénium.

Dans cet exemple, on extrait le ruthénium à partir d'un effluent aqueux fortement chargé en sels, qui contient 1,38mol/l de HNO₃, 2g/l de Na⁺, 6mg/l de K⁺ et 1mg/l de ruthénium.

Pour effectuer cette séparation, on met en contact sous agitation magnétique pendant 20,5h 1g de poly-4-(vinylpyridine) avec 40ml de la solution aqueuse qui contient 1mg/l de ruthénium. On sépare ensuite la résine de la solution sur un filtre en papier et on dose le ruthénium résiduel dans la solution par une torche à plasma.

On obtient ainsi un taux d'extraction de 66,5% en ruthénium, ce qui correspond à 2,66.10⁻² mg de ruthénium par gramme de résine.

Le dosage du sodium et du potassium dans la solution filtrée indique qu'ils n'ont pas été extraits par la résine.

### Exemple 3 : Séparation du ruthénium.

On suit le même mode opératoire que dans l'exemple 2, en utilisant un effluent ayant la même composition, sauf en ce qui concerne sa teneur en ruthénium qui est de 0,3mg/l. Dans ces conditions, après 20,5h d'agitation, le taux d'extraction du ruthénium est de 100%, ce qui correspond à 1,2.10⁻²mg de ruthénium par gramme de résine.

L'utilisation de la polyvinylpyridine permet donc d'atteindre un taux d'extraction du ruthénium de 100%, pour des teneurs en ruthénium très faibles, même en présence de teneurs élevées en sodium et en potassium.

### Exemple 4 : Séparation du ruthénium.

On extrait le ruthénium d'une solution aqueuse ayant une concentration en acide nitrique de 1,38mol/l qui contient 0,5mg/l de ruthénium, 2g/l de sodium et 6mg/l de potassium, à laquelle on ajoute du chlorure de sodium pour avoir une concentration en chlorure de sodium de 1mol/l.

On met en contact sous agitation 2,5g de polyvinylpyridine avec 100ml de la solution sous agitation magnétique à 750tours/minute pendant 1h30min. On sépare alors la résine PVP sur un filtre en papier et on détermine la teneur en ruthénium résiduel de la solution sur une torche à plasma.

On répète ces opérations en utilisant des temps de contact de 3h, 8h et 24,25h. Les résultats obtenus sont donnés dans le tableau 1 qui suit.

**TABLEAU 1**

| Temps de contact (h) | % extraction |
|---|---|
| 0 | 0 |
| 1,5 | 68,5 |
| 3 | 68,5 |
| 8 | 68,5 |
| 24,25 | 72 |

Au vu de ces résultats, on constate que le rendement maximal d'extraction est pratiquement atteint au bout de 1,5h.

En revanche, lorsqu'on effectue la même séparation en l'absence d'ions Cl⁻, il faut attendre 8h pour que la résine commence à extraire le ruthénium.

Ainsi, la présence d'ions chlorures est bénéfique car elle accélère l'extraction du ruthénium.

### Exemple 5 : Séparation du ruthénium.

Dans cet exemple, on sépare le ruthénium à partir d'effluents contenant du sodium et du potassium et on étudie l'influence du pH sur le taux d'extraction.

Dans ce but, on met en contact 10ml de solution contenant des traces de Ru, 6mg/l de potassium et 2g/l de sodium et ayant des concentrations en acide nitrique correspondant à des pH allant de 3 à 9 avec 0,2g de poly-4-(vinylpyridine) environ sous agitation pendant 1h. On sépare ensuite la résine sur un filtre en papier et on dose le ruthénium résiduel dans la solution par une torche à plasma.

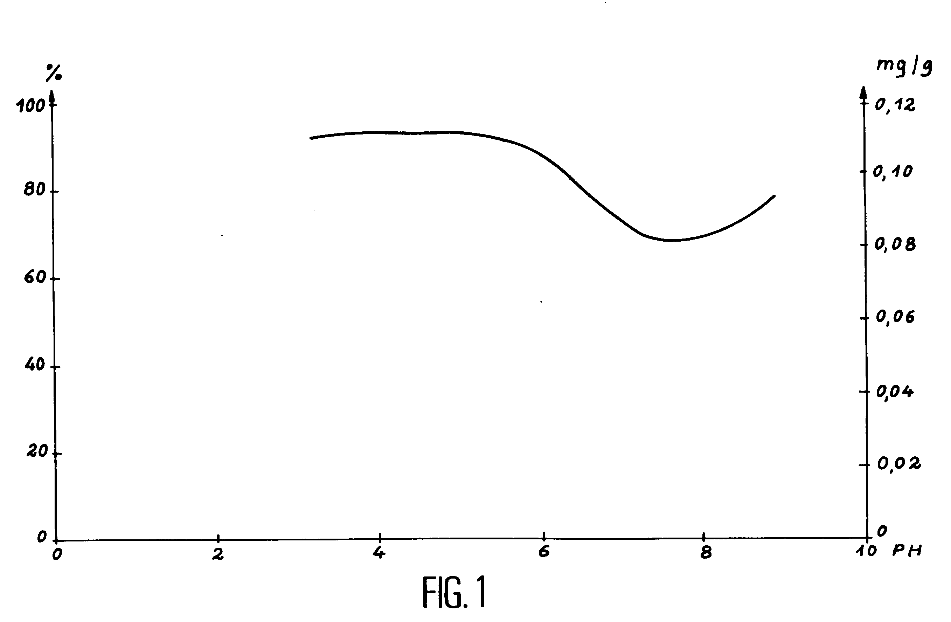

Sur la figure 1 annexée, on a représenté le pourcentage d'extraction en ruthénium et la quantité de ruthénium fixé par gramme de résine en fonction du pH de la solution.

Au vu de cette figure 1, on remarque que le ruthénium est extrait plus efficacement pour des pH acides inférieurs à 6, soit des concentrations en acide nitrique supérieures à 10⁻⁶mol/l.

### Exemples 6 à 9 : Séparation du rhodium.

Dans ces exemples, on extrait le rhodium à partir de solutions aqueuses contenant 2mmol/l environ de rhodium et ayant les concentrations en acide nitrique données dans le tableau 2 qui suit.

Pour réaliser l'extraction, on met en contact 0,2g environ de poly-4-(vinylpyridine) (PVP) avec 10ml de solution aqueuse sous agitation horizontale pendant 24h. On sépare alors la polyvinylpyridine de la solution par filtration sur un filtre en papier, puis on dose le rhodium résiduel dans la solution par absorption atomique.

Les résultats obtenus sont donnés également dans le tableau 2.

**TABLEAU 2**

| Ex. | (HNO₃) (mol/l) | % extraction | Masse de résine (g) | Quantité de Rh fixé par gramme de résine (mg/g) |
|---|---|---|---|---|
| 6 | 0,7 | 20 | 0,23 | 1,3 |
| 7 | 1,38 | 30 | 0,19 | 3,2 |
| 8 | 2,8 | 9 | 0,28 | 0,66 |
| 9 | 4,2 | 2 | 0,23 | 0,17 |

Au vu de ces résultats, on constate que le rhodium se fixe moins bien sur la PVP lorsque l'acidité du milieu est trop élevée. Le maximum d'extraction est observé pour des concentrations en acide nitrique de 1 à 2mol/l.

### Exemples 10 à 13 : Séparation du rhodium.

Dans ces exemples, on suit le même mode opératoire que dans les exemples 6 à 9, mais on utilise des quantités de polyvinylpyridine différentes avec une solution aqueuse contenant 2mmol/l de rhodium et 1,38mol/l d'acide nitrique.

Les quantités de polyvinylpyridine utilisées et les résultats obtenus sont donnés dans le tableau 3.

**TABLEAU 3**

| Ex. | [poly(vinylpyridine)] (en g/l) | % extraction | Quantité Rh fixé par g de résine (mg/g) |
|---|---|---|---|
| 10 | 10 | 26 | 5,50 |
| 11 | 20 | 30 | 3,20 |
| 12 | 30 | 34 | 2,4 |
| 13 | 40 | 40 | 2,14 |

Au vu de ces résultats, on constate que le rendement d'extraction augmente avec la quantité de polyvinylpyridine utilisée.

### Exemples 14 à 16 : Séparation du palladium.

Dans ces exemples, on extrait le palladium présent dans une solution aqueuse contenant 1mmol/l environ de palladium et 1,38mol/l d'acide nitrique en mettant en contact 10ml de solution avec des quantités de polyvinylpyridine correspondant à des concentrations de 2 à 40g/l pendant 24h sous agitation horizontale. On sépare ensuite la polyvinylpyridine sur un filtre en papier et on dose le palladium résiduel par absorption atomique.

Les quantités de polyvinylpyridine utilisées et les résultats obtenus sont donnés dans le tableau 4.

**TABLEAU 4**

| Ex. | Concentration en PVP (g/l) | Concentration initiale en Pd (mg/l) | % extraction | Quantité de Pd fixé par g de résine (mg/g) |
|---|---|---|---|---|
| 14 | 2 | 91 | 100 | 45,5 |
| 15 | 10 | 86 | 100 | 8,6 |
| 16 | 40 | 86 | 100 | 2,1 |

Au vu de ces résultats, on constate que l'extraction du palladium s'effectue facilement et à 100% pour des concentrations initiales en PVP de 2 à 40g/l.

Les résultats obtenus dans les exemples précédents montrent qu'en choisissant de façon appropriée l'acidité de la solution aqueuse de départ, le temps de contact et la quantité de résine utilisée, et en ajoutant des ions appropriés tels que Cl⁻, on peut extraire sélectivement le ruthénium, le rhodium ou le palladium.

### Exemple 17 : Séparation du ruthénium.

Dans cet exemple, on sépare le ruthénium présent dans des effluents de haute activité ayant une concentration en acide nitrique de 0,6mol/l, contenant, outre le ruthénium, du césium 137 et du césium 134.

Pour réaliser l'extraction, on met en contact sous agitation mécanique, 3ml d'effluent avec 200mg de poly-4-(vinylpyridine)(PVP) pendant 1h15min. On sépare alors la résine de l'effluent par filtration et on détermine les teneurs en ruthénium et césium de la solution recueillie.

Les résultats obtenus ainsi que les teneurs en ruthénium et césium de la solution de départ sont donnés dans le tableau 5 qui suit.

**TABLEAU 5**

| | Ru106 | Cs137 | Cs134 | Charge en sels dont 90% en NaNO₃ | (H⁺) |
|---|---|---|---|---|---|
| Solution initiale (mg/l) | 1.14.10⁻² | 1.43 | 2.86.10⁻² | 367g.l⁻¹ | 0,6M |
| Après décontamination (mg/l) | 4.59.10⁻³ | 1.32 | 2.64.10⁻² | | |
| % d'extraction | 59.7 | 7.7 | 7.6 | | |
| Q mg/g | 1.02.10⁻⁴ | 1.65.10⁻³ | 3.24.10⁻⁵ | | |

Au vu de ce tableau, on constate que la polyvinylpyridine est très efficace pour retenir le ruthénium 106, puisque le rendement d'extraction est de 60%, ce qui correspond à un taux de fixation de 1,02.10⁻⁴mg de ruthénium par gramme de résine.

En revanche, si l'on effectue le même traitement sur des effluents de faible activité, la décontamination est moins efficace, car le taux de décontamination croît avec l'activité de la solution initiale.

### Exemples 18 à 23 : Séparation du ruthénium, du manganèse et du cobalt.

Dans ces exemples, on met en contact 3ml d'un effluent à moyenne activité (MA) ayant la composition donnée dans le tableau 6 qui suit avec des masses différentes de polyvinylpyridine réticulée par 2% de divinylbenzène pendant 40min sous agitation. L'acidité nitrique de l'effluent étant de 0,1mol/l. Après ce temps de contact, on sépare la polyvinylpyridine de l'effluent et on détermine les concentrations en ruthénium, manganèse, cobalt, césium et cérium + praséodyme 144 de l'effluent séparé. Les résultats obtenus sont donnés dans le tableau 6 qui suit.

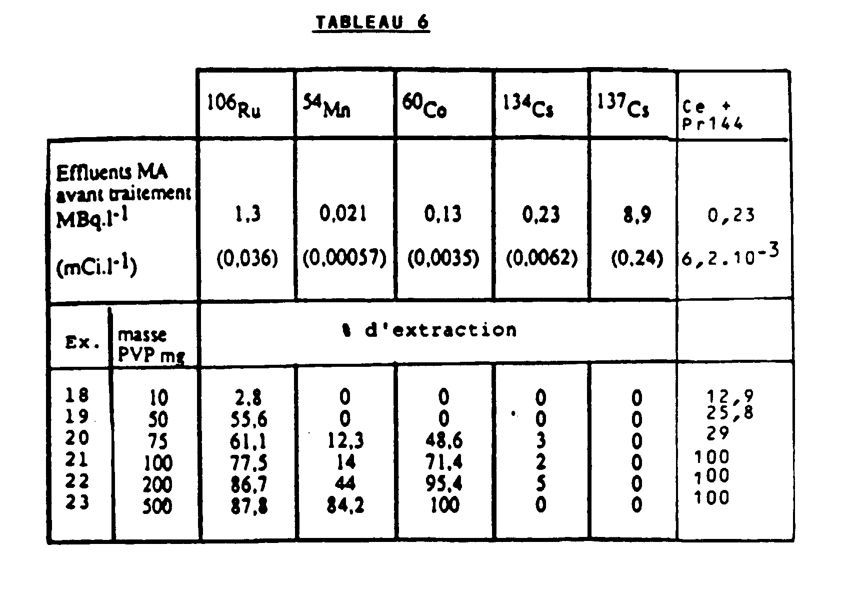

Au vu de ce tableau, on constate que l'on peut éliminer efficacement le ruthénium, le manganèse, le cobalt, le cérium et le praséodyme d'effluents de moyenne activité, mais que l'on n'extrait pas le césium.

### Exemple 24 : Séparation du ruthénium, du niobium et de l'antimoine.

Dans cet exemple, on extrait le ruthénium, le niobium et l'antimoine d'effluents de haute activité (HA) ayant la composition et les concentrations en HNO₃ données dans le tableau 7 qui suit.

Pour effectuer l'extraction du ruthénium, on met en contact 50g de résine avec 1l d'effluent sous agitation pendant 30min, puis on sépare la résine de l'effluent par filtration et on détermine les teneurs en ruthénium, antimoine, césium et niobium de l'effluent filtré. Les résultats obtenus sont donnés dans le tableau 7 qui suit.

**TABLEAU 7**

| | ⁹⁵Nb | ¹⁰⁶Ru | ¹²⁵Sb | ¹³⁷Cs | ¹³⁴Cs |
|---|---|---|---|---|---|
| Activité avant traitement MBq.l-1 | 1,6 | 137 | 20 | 115 | 22 |
| (mCi.l⁻¹) | (0,043) | (3,7) | (0,54) | (3,1) | (0,6) |

| [HNO₃] initiale en mol/l | % d'extraction | | | | |
|---|---|---|---|---|---|
| 0 | 0 | 0 | 0 | 0 | 0 |
| 0,089 | 100 | 93 | 43 | 0 | 0 |
| 0,7 | 47 | 31 | 31 | 0 | 0 |
| 0,9 | 53 | 35 | 26 | 0 | 0 |
| 1,3 | 44 | 39 | 33 | 0 | 0 |
| 1,9 | 1 | 6 | 4 | 0 | 0 |

Au vu de ce tableau, on constate que l'on obtient un taux de décontamination très élevé en ruthénium et en niobium lorsque la concentration en acide nitrique de la solution de départ est de 0,089mol/l, ce qui correspond à la concentration habituelle en acide nitrique des effluents de haute activité.

### Exemple 25 : Séparation du ruthénium.

Dans cet exemple, on extrait le ruthénium d'un effluent concentré par évaporation ayant la composition donnée dans le tableau 8 qui suit.

Dans ce but, on met en contact 200mg de polyvinyl-4 pyridine pendant 1h15min avec 3ml d'effluent, puis on sépare la polyvinylpyridine par filtration et on détermine les teneurs en ruthénium et césium de l'effluent. Les résultats obtenus sont donnés également dans le tableau 8.

**TABLEAU 8**

| | | | |
|---|---|---|---|
| [HNO₃] = 0,6 M | | | |
| Masse résine = 200 mg | ¹⁰⁶Ru | ¹³⁷Cs | ¹³⁴Cs |
| Temps contact = 1h 15mn | | | |
| Activité des effluents avant traitement GBq.l⁻¹ | 1,4 | 4,8 | 1,37 |
| (mCi.l⁻¹) | (38) | (130) | (37) |
| % d'extraction | 56 | 0 | 0 |

Au vu de ce tableau, on constate que l'on obtient un rendement d'extraction en ruthénium très satisfaisant.

### Exemple 26 : Séparation du technétium, du ruthénium, du rhodium, du fer, du nickel et du cobalt.

Dans cet exemple, on extrait le technétium, le ruthénium, le rhodium, le fer, le nickel et le cobalt d'un concentrat de produits de fission, comportant de nombreux éléments, c'est-à-dire de la solution obtenue après le premier cycle de séparation de l'uranium et du plutonium d'une solution de dissolution de combustibles nucléaires usés.

Dans ce but, on met en contact 2ml de concentrat avec 1g de polyvinylpyridine (PVP) pendant 4h15min sous agitation mécanique par séquences de 5min. On filtre une première fois la polyvinylpyridine, puis on la soumet à un lavage par 18ml d'acide nitrique 1N et on filtre une seconde fois la résine que l'on dissout ensuite à chaud dans 15ml d'acide sulfurique. On analyse la solution obtenue après la première filtration et la solution de dissolution de la résine par spectrométrie gamma, spectrométrie alpha et spectrométrie d'émission atomique (ICP).

Les résultats obtenus montrent que dans ces conditions les métaux suivants : Na, Cs, Mg, Sr,Ba,Cd,B,Al, La, Pr, Ce, Gd, Sm, Eu, Am, Cm, Np, ne sont pas extraits par la PVP, toutefois, l'uranium est extrait avec un rendement de 20%.

En revanche, les métaux des groupes VIIb et VIII sont extraits comme on peut le voir dans le tableau 9 qui suit.

**TABLEAU 9**

| METAUX EXTRAITS | | | | | |
|---|---|---|---|---|---|
| Groupe VIIB | Tc | | | | |
| % d'extraction | 98 ± 1 ^{(*)} | | | | |
| Groupe VIII | Fe | Ni | Rh | Ru | Co |
| % d'extraction | 57±1 ^{(*)} | 95±1 ^{(*)} | 97±1 ^{(*)} | 88±9 ^{(*)} | 55 |

| | | | | | |
|---|---|---|---|---|---|
| (*) Ecart type calculé sur trois expériences. | | | | | |

Ainsi, la résine extrait très bien le technétium, le ruthénium, le rhodium, le fer, le nickel et le cobalt avec une bonne sélectivité vis-à-vis des alcalins, des alcalinoterreux et des actinides.

Dans le tableau 10, on a donné la distribution des cations métalliques en % massiques dans le concentrat de produits de fission et sur la résine PVP.

**TABLEAU 10**

| Distribution des cations métalliques % massique | Fe | Ni | Rh | Ru | Tc | Total |
|---|---|---|---|---|---|---|
| Dans concentrat PF | 4,2 | 0,91 | 0,42 | 1,7 | 0,79 | 8,51 |
| Fixés sur PVP | 37 | 14,4 | 6,4 | 26,5 | 12,4 | 100 |

Au vu de ce tableau, on voit l'intérêt d'utiliser la polyvinylpyridine pour séparer les métaux des groupes VIIb et VIII.

Les cations fixés peuvent ensuite être récupérés en solution aqueuse, si on le désire, par dissolution de la résine dans H₂SO₄.

### Exemple 27 : Séparation du technétium, du ruthénium, du rhodium, du palladium, du fer et du nickel.

Dans cet exemple, on extrait le technétium, le ruthénium, le rhodium, le palladium, le fer et le nickel à partir de solutions de dissolution de combustibles irradiés en mettant en contact 1g de polyvinylpyridine avec 10ml de la solution de dissolution, sous agitation mécanique, pendant 1h15min. Après cette mise en contact, on filtre une première fois la résine et on analyse la solution par spectrométrie gamma et spectrométrie d'émission atomique (ICP) pour déterminer ses teneurs en palladium, ruthénium, rhodium, technétium, nickel et fer.

On soumet la résine séparée par filtration à un lavage par 18ml d'acide nitrique 1N, puis on filtre la résine, on la dissout dans 5ml d'acide sulfurique concentré et on analyse la solution de dissolution par spectrométrie gamma et spectrométrie d'émission atomique (ICP).

Les résultats obtenus sont donnés dans le tableau 11 qui suit.

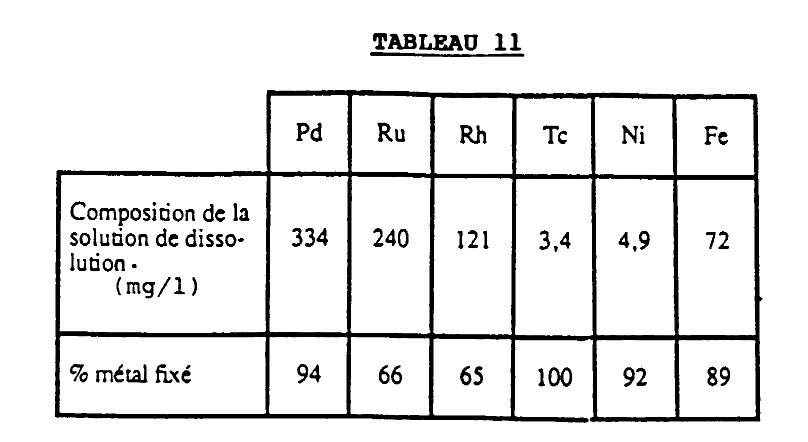

Au vu de ce tableau, on remarque que les pourcentages d'extraction du palladium, du ruthénium, du rhodium et du technétium sont très élevés, notamment pour le technétium et le palladium.

Dans le tableau 12 qui suit, on a donné les pourcentages et la distribution des métaux récupérés.

**TABLEAU 12**

| Eléments | Composition de la solution (mg/l) | Distribution des métaux dans la solution de dissolution % | % métal récupéré après dissolution de la PVP | Distribution des métaux récupérés % |
|---|---|---|---|---|
| U | 360 000 | 99,6 | 9.10⁻⁵ | 0,95 |
| Pu | 1030 | 0,28 | 0,3 | 10,9 |
| Pd | 30,5 | 0,0084 | 41 | 18,7 |
| Ru | 73 | 0,020 | 15 | 16,6 |
| Rh | 27,7 | 0,0077 | 30 | 12,7 |
| Tc | 30 | 0,0083 | 25,3 | 11,5 |
| Ni | 9,9 | 0,0027 | 12 | 1,8 |
| Fe | 111,5 | 0,031 | 10,8 | 18 |

Au vu de ce tableau, on remarque que l'on récupère 25% du technétium, 41% du palladium, 15% du ruthénium et 30% du rhodium.

Ainsi, un lavage à l'acide nitrique de la résine permet d'éliminer les métaux partiellement coextraits.

Les facteurs de décontamination sont de 1,1.10⁶ pour l'uranium, de 317 pour le plutonium et de 874 pour les émetteurs gamma (Ru 106 déduit) ce qui est très intéressant.

Les résultats des deux derniers exemples montrent que la résine polyvinylpyridine n'extrait pas les alcalins et alcalinoterreux ainsi que les métaux trivalents, qu'elle n'extrait pas ou très peu les transuraniens, mais qu'elle extrait très bien les métaux de transition.

L'efficacité de la résine diminue quand la charge en sels augmente. Ainsi, pour une solution de dissolution, la charge en sels est voisine de 200g/l et la capacité d'échange de la polyvinylpyridine est égale dans les conditions opératoires utilisées à
- 3,1mg de palladium par gramme de résine,
- 0,8mg de rhodium par gramme de résine
- 1,6mg de ruthénium par gramme de résine, et
- supérieure à 0,034mg de technétium par gramme de résine.

Pour un concentrat de produits de fission, la charge en sel est voisine de 100g/l et la capacité d'échange de la résine est dans ces conditions de :
- 0,7mg de Rh par gramme de résine
- 3mg de Ru par gramme de résine, et
- 1,4mg de Tc par gramme de résine.

Ainsi, on peut isoler les métaux précieux Ru, Rh, Pd et Tc de solutions concentrées en produits de fission et de solutions de dissolution de combustibles nucléaires usés. On peut de plus améliorer la décontamination de ces métaux en optimisant les conditions de fixation et le mode de lavage de la résine chargée, par exemple en isolant le ruthénium par volatilisation, puis en lavant la phase aqueuse riche, par exemple au tributylphosphate pour éliminer les traces résiduelles de plutonium et d'uranium.

### Exemple 28: Décontamination d'un effluent de moyenne activité.

Dans cet exemple, on met en contact 3ml d'effluent de moyenne activité ayant la composition donnée dans le tableau 13 qui suit, et une concentration en acide nitrique de 5. 10⁻³mol/l, avec 67g/l de polyvinylpyridine (200mg) pendant 30min sous agitation. Après avoir séparé la polyvinylpyridine de l'effluent, on détermine les concentrations en plutonium, américium, curium et en produits de fission de l'effluent séparé. Les résultats obtenus sont donnés dans le tableau 13 qui suit.

Au vu de ces résultats, on remarque que la polyvinylpyridine extrait de nombreux émetteurs alpha et de nombreux produits de fission, sauf le césium et le strontium.

**TABLEAU 13**

| Elément | Concentrat dans l'effluent | | % extrait |
|---|---|---|---|
| | mg/l | MBq/l | |
| Pu total | 7.10⁻⁴ | | >93,8 |
| ²³⁸Pu | 2.10⁻⁵ | | >98,8 |
| ²⁴¹Am | 8.10⁻⁵ | | >98,8 |
| ²⁴²Cm | 1.10⁻⁸ | | >90,9 |
| ²⁴⁴Cm | 1.10⁻⁶ | | >96,1 |
| Produits de fission(total) | | 1,5688 | 72,5 |
| ¹⁴⁴Ce | | 0,1517 | 100 |
| ¹⁰⁶Ru | | 0,814 | 57,3 |
| ¹³⁷Cs | | 0,2516 | 5,9 |
| ⁶⁰Co | | 0,3589 | 78,4 |
| ⁵⁴Mn | | 0,0925 | 93,6 |
| ⁸⁵Sr | | 0,0444 | 8,3 |

### Exemple 29 : Décontamination d'un effluent de moyenne activité.

Dans cet exemple, on réalise la décontamination d'un effluent de moyenne activité ayant la composition donnée dans le tableau 14, en opérant de la façon suivante.

On fait circuler l'effluent dans une colonne d'un diamètre interne de 0,8cm contenant 1g de polyvinylpyridine, ce qui correspond à une hauteur de polyvinylpyridine de 4,7cm,en réalisant l'alimentation en effluent sous basse pression en haut de la colonne avec une pompe doseuse, à un débit de 3ml/min. Au bas de la colonne, on recueille l'effluent traité et on l'analyse pour déterminer les éléments qu'il contient, par spectrométrie d'émission atomique dans le cas des éléments présents en quantité pondérale, par spectrométrie gamma dans le cas des radioéléments émetteurs gamma et par spectrométrie alpha dans le cas des radioéléments émetteurs alpha.

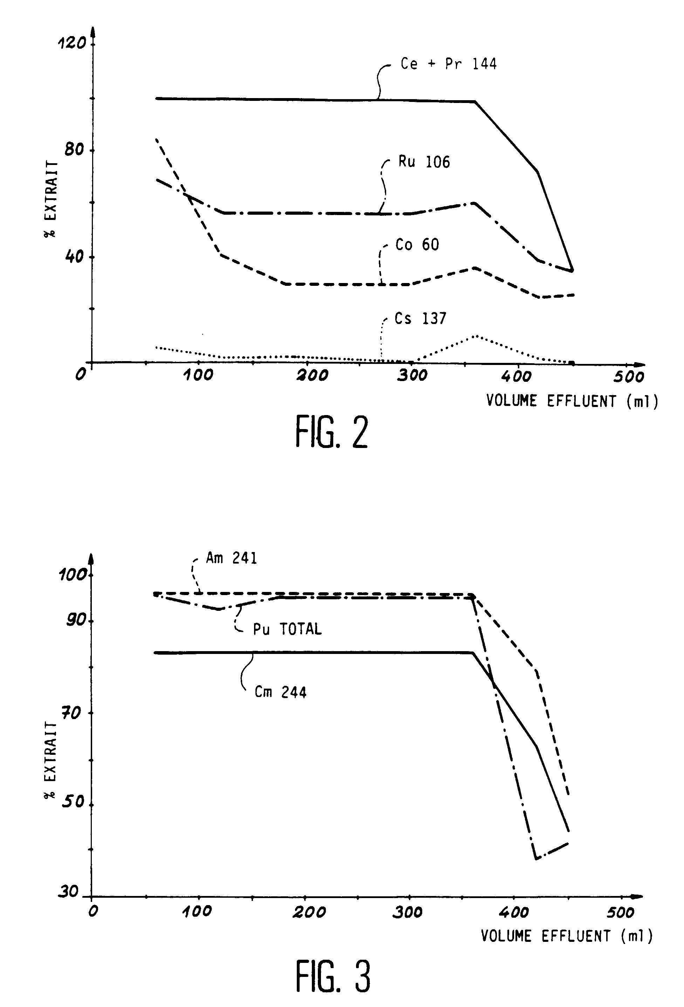

Les résultats obtenus sont donnés sur les figures 2 et 3 annexées.

La figure 2 représente les pourcentages d'émetteurs gamma (Ru106, Co60, Ce+Pr144 et Cs137) extraits en fonction du volume d'effluent (en ml) traité.

La figure 3 représente les pourcentages d'émetteurs alpha (Pu total, Am241 et Cm244) extraits en fonction du volume d'effluent (en ml) traité.

Au vu de ces figures, on remarque que le pourcentage d'extraction est très important jusqu'à ce que le volume d'effluent traité atteigne

**TABLEAU 14**

| Constituant | Concentration | | |
|---|---|---|---|
| | mg/l | mCi/l | mol/l |
| HNO₃ | | | 0,005 |
| Mg | 5 | | |
| K | 10 | | |
| Co | 14 | | |
| Na | 6000 | | |
| U | 5 | | |
| ⁶⁰Co | | 1.10⁻² | |
| ¹⁰⁶Ru | | 2,3.10⁻² | |
| ¹³⁴Cs | | 7.10⁻⁴ | |
| ¹³⁷Cₛ | | 7.10⁻⁴ | |
| ¹⁵⁵Eu | | 2.10⁻⁴ | |
| ¹⁴⁴Ce+¹⁴⁴Pr | | 9.10⁻³ | |
| Pu | 8,6.10⁻⁴ | | |
| ²⁴⁴Cm | 2,7.10⁻⁷ | | |
| ²⁴²Cm | 2,9.10⁻⁹ | | |
| ²⁴¹Am | 2,1.10⁻⁵ | | |

360ml/g de polyvinylpyridine.

Après cette première fixation, on fait passer dans la colonne 30ml d'eau à un débit de 3ml/min mais en l'introduisant dans la colonne par le bas pour la faire circuler en sens inverse à celui utilisé précédemment pour le traitement de l'effluent. Après cette opération, on traite une nouvelle quantité d'effluent dans la colonne dans les mêmes conditions que précédemment et on détermine les quantités d'éléments présents dans l'effluent traité.

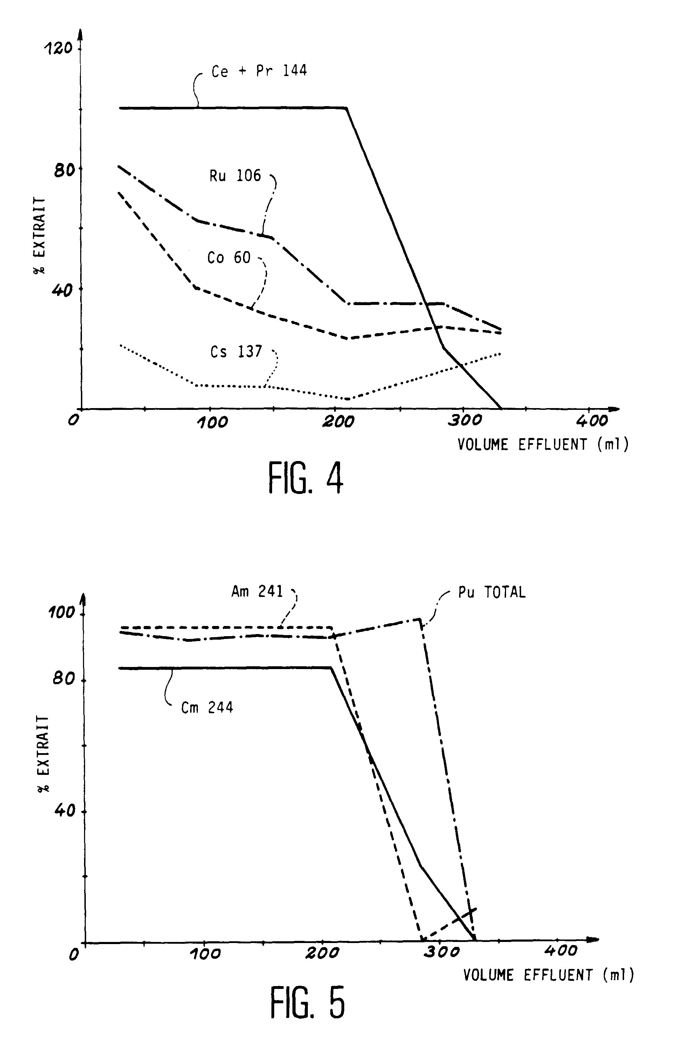

Les résultats obtenus sont donnés sur les figures 4 et 5.

La figure 4 représente les pourcentages d'éléments émetteurs gamma (Ru106, Co60, Ce+Pr144 et Cs137) extraits en fonction du volume d'effluent traité (en ml).

La figure 5 représente les pourcentages d'émetteurs alpha (Pu total, Am241, Cm244) extraits en fonction du volume d'effluent traité (en ml).

Au vu de ces figures, on remarque que l'efficacité de la colonne est à nouveau très bonne, mais que le volume d'effluent traité est plus faible si l'on veut conserver une bonne efficacité, ce volume étant de 210ml d'effluent par gramme de PVT pour cette deuxième percolation.

Ainsi, le traitement d'un effluent dont l'activité des radioéléments gamma est de 0,654mCi/l et l'acidité de 0,005M par la polyvinylpyridine permet de fixer 60% du ruthénium et 100% des éléments suivants : Pu, Am, Cm et Ce+Pr.

### Exemple 30 à 34 : Décontamination d'effluents de moyenne activité.

Dans ces exemples, on étudie l'influence de différentes solutions de lavage sur la régénération de la PVP et la réextraction de Ru, Cs, Co, Mn, Ce+Pr, Sr et Pu dans la solution de lavage.

Dans ces exemples, on utilise les quantités de polyvinylpyridine données dans le tableau 15 pour réaliser une première extraction de ces différents éléments en réalisant la mise en contact de l'effluent avec la PVP sous agitation pendant 30 min, et on détermine les quantités d'éléments fixés lors de cette première extraction.

Les résultats sont donnés dans le tableau 15 en pourcentages par rapport aux quantités présentes dans l'effluent.

Après cette première extraction, on réalise un lavage de la PVP par H₂O, NH₄OH 0,1M, NH₄OH 0,1M + NaClO 0,1M, HNO₃ 0,1M ou HNO₃ 4M, en utilisant une quantité de solution de lavage telle qu'elle corresponde aux concentrations en PVP dans la solution de lavage données dans le tableau 15. On détermine alors les teneurs des solutions de lavage en Ru, Cs, Co, Mn, Ce+Pr, Sr et Pu.

Les résultats obtenus sont donnés également dans le tableau 15, en pourcentages par rapport aux quantités fixées sur la PVP.

Au vu de ces résultats, on remarque que la plupart des éléments sont peu réextraits, sauf pour Cs et Sr qui étaient à peine extraits par la PVP.

Après lavage, on utilise la polyvinylpyridine ainsi lavée pour traiter une nouvelle quantité d'effluent de moyenne activité, en réalisant la mise en contact pendant 30min et en utilisant une quantité d'effluent telle qu'elle corresponde aux concentrations en PVP données dans le tableau 15.

On détermine ensuite les teneurs en Ru, Cs, Co, Mn, Ce+Pr, Sr et Pu de l'effluent traité.

Les résultats obtenus qui sont exprimés en pourcentage d'extraction sont donnés dans le tableau 15.

Au vu de ces résultats, on remarque que toutes les solutions de lavage sont efficaces bien qu'elles réextraient peu les éléments fixés lors de la première extraction. L'efficacité d'extraction est même supérieure après une régénération de la PVP par HNO₃, ceci provient du fait qu'une mise en milieu HNO₃ 0,1M avant une nouvelle fixation permet d'obtenir une meilleure efficacité de la PVP.

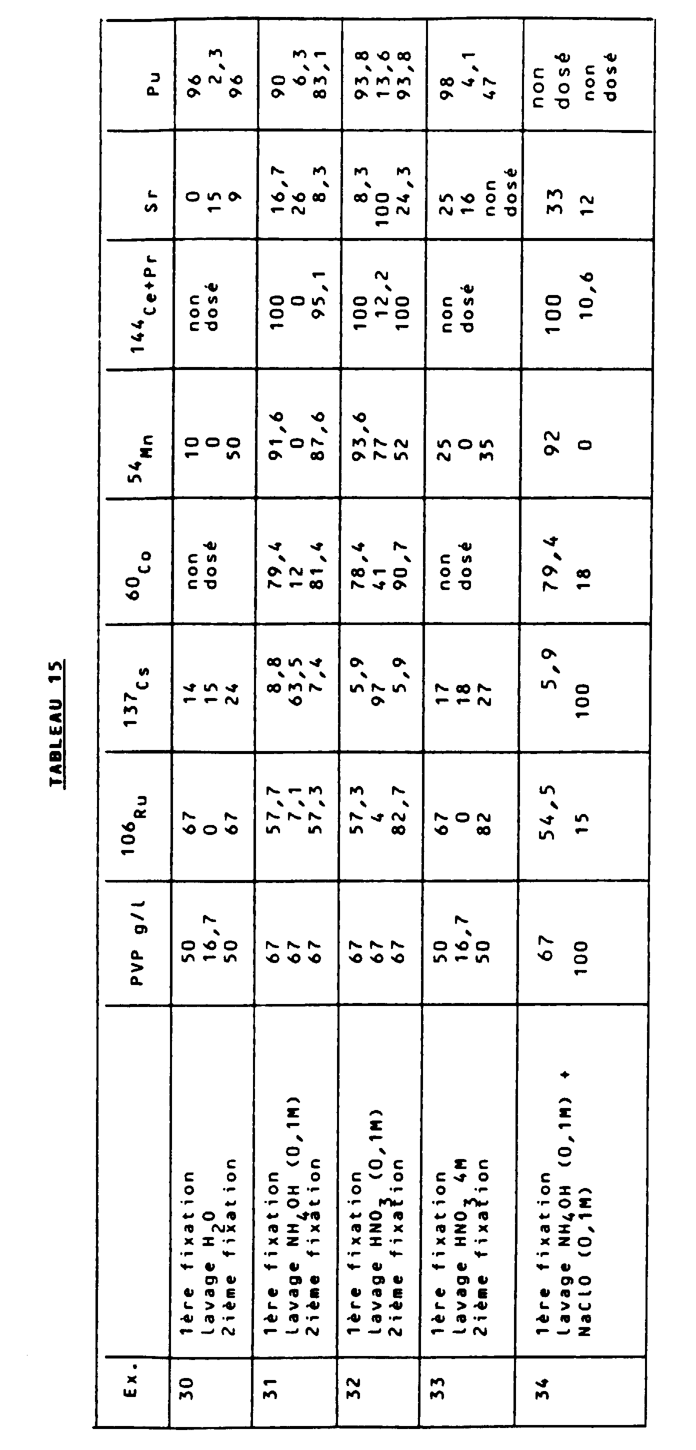

## Revendications

1. Procédé de séparation d'au moins un élément choisi parmi Nb, Sb, Ce, Pr, les actinides sauf l'uranium, et les éléments des groupes VIIb et VIII de la Classification Périodique des Eléments, présents dans une solution aqueuse issue du retraitement des combustibles nucléaires usés, caractérisé en ce qu'il consiste à mettre en contact ladite solution aqueuse avec une résine solide à base de polymère ou copolymère de vinylpyridine, et à séparer de ladite solution la résine ayant fixé le ou lesdits éléments.

2. Procédé selon la revendication 1, caractérisé en ce que la résine est la polyvinyl-4-pyridine réticulée par du divinylbenzène.

3. Procédé selon la revendication 1, caractérisé en ce que la solution aqueuse est une solution nitrique.

4. Procédé selon la revendication 3, caractérisé en ce que la concentration en acide nitrique de la solution aqueuse est de 10⁻⁷ à 4mol/l.

5. Procédé selon l'une quelconque des revendications 1 à 4, caractérisé en ce que le temps de contact entre la solution aqueuse et la résine solide est de 1min à 24h.

6. Procédé selon l'une quelconque des revendications 1 à 5, caractérisé en ce que la quantité de résine utilisée est de 10 à 500g/l de solution aqueuse.

7. Procédé selon l'une quelconque des revendications 1 à 3, caractérisé en ce que l'élément du groupe VIII est le ruthénium.

8. Procédé selon la revendication 7, caractérisé en ce que la concentration en acide nitrique de la solution aqueuse est au plus égale à 1mol/l, et en ce que l'on effectue la mise en contact pendant une durée de 10 à 60min.

9. Procédé selon la revendication 7, caractérisé en ce que l'on ajoute des ions Cl⁻ à la solution aqueuse.

10. Procédé selon l'une quelconque des revendications 1 à 3, caractérisé en ce que l'élément du groupe VIII est le rhodium et/ou le palladium.

11. Procédé selon la revendication 10, caractérisé en ce que la solution aqueuse a une concentration en acide nitrique de 1 à 2mol/l et en ce que l'on effectue la mise en contact pendant une durée inférieure à 10min.

12. Procédé selon l'une quelconque des revendications 1 à 3, caractérisé en ce que la solution aqueuse est un effluent de moyenne ou haute activité et en ce que l'on sépare de cet effluent du ruthénium, du niobium, de l'antimoine, du manganèse, du cobalt, du cérium, du praséodyme, du plutonium, du curium et de l'américium.

13. Procédé selon l'une quelconque des revendications 1 à 3, caractérisé en ce que la solution aqueuse est un concentrat de produits de fission et en ce que l'on sépare de ce concentrat Fe, Ni, Rh, Ru, Co et Tc.

14. Procédé selon l'une quelconque des revendications 1 à 3, caractérisé en ce que la solution aqueuse est une solution de dissolution de combustibles nucléaires usés et en ce que l'on sépare de cette solution Pd, Ru, Rh, Tc, Co, Ni et Fe.

15. Procédé selon l'une quelconque des revendications 1 à 14, caractérisé en ce que l'on régénère ensuite la résine solide par mise en contact de celle-ci avec une solution de lavage.

16. Procédé selon la revendication 15, caractérisé en ce que la solution de lavage est l'eau, l'acide nitrique 0,1 à 4M ou NH₄OH 0,1M.

## Patentansprüche

1. Verfahren zur Trennung von einem der Elemente Nb, Sb, Ce, Pr, der Aktinide, außer Uran, und der Elemente der Gruppen VIIb und VIII des Periodensystems der Elemente aus wässrigen Lösungen entstehend bei der Wiederaufarbeitung von Kernbrennstoffen, dadurch gekennzeichnet, daß die genannten wässrigen Lösungen mit einem Festharz auf der Grundlage von Vinylpyridin-Polymer oder -Copolymer in Kontakt gebracht werden und das Harz mit den gebundenen Elementen aus der genannten Lösung abgeschieden wird.

2. Verfahren gemäß Anspruch 1, dadurch gekennzeichnet, daß als Harz mit Divinylbenzen vernetztes Polyvinyl-4-Pyridin verwendet wird.

3. Verfahren gemäß Anspruch 1, dadurch gekennzeichnet, daß als wässrige Lösung eine Stickstofflösung verwendet wird.

4. Verfahren gemäß Anspruch 3, dadurch gekennzeichnet, daß die Stickstoffkonzentration in der wässrigen Lösung zwischen 10⁻⁷ und 4 mol/l beträgt.

5. Verfahren gemäß einem der Ansprüche 1 bis 4, dadurch gekennzeichnet, daß die Kontaktzeit zwischen der wässrigen Lösung und dem Festharz 1 min bis 24 h beträgt.

6. Verfahren gemäß einem der Ansprüche 1 bis 5, dadurch gekennzeichnet, daß die Menge des verwendeten Harzes zwischen 10 und 500 g/l wässriger Lösung beträgt.

7. Verfahren gemäß einem der Ansprüche 1 bis 3, dadurch gekennzeichnet, daß als Element der Gruppe VIII Ruthenium verwendet wird.

8. Verfahren gemäß Anspruch 7, dadurch gekennzeichnet, daß die Salpetersäurekonzentration in der wässrigen Lösung mindestens 1 mol/l und die Kontaktzeit zwischen 10 und 60 min beträgt.

9. Verfahren gemäß Anspruch 7, dadurch gekennzeichnet, daß die wässrige Lösung mit Cl⁻-Ionen versetzt wird.

10. Verfahren gemäß einem der Ansprüche 1 bis 3, dadurch gekennzeichnet, daß als Element der Gruppe VIII Rhodium und/oder Palladium verwendet wird.

11. Verfahren gemäß Anspruch 10, dadurch gekennzeichnet, daß die wässrige Lösung eine Salpetersäurekonzentration zwischen 1 und 2 mol/l aufweist und die Kontaktzeit weniger als 10 min beträgt.

12. Verfahren gemäß einem der Ansprüche 1 bis 3, dadurch gekennzeichnet, daß die wässnge Lösung ein ausströmendes Medium mittlerer oder hoher Aktivität ist und aus diesem Medium die Elemente Ruthenium, Niob, Antimon, Mangan, Kobalt, Zer, Praseodym, Plutonium, Kurium und Amerizium abgeschieden werden.

13. Verfahren gemäß einem der Ansprüche 1 bis 3, dadurch gekennzeichnet, daß die wässrige Lösung eine Konzentration aus Kernspaltungsprodukten ist und aus dieser Konzentration die Elemente Fe, Ni, Rh. Ru, Co und Tc abgeschieden werden.

14. Verfahren gemäß einem der Ansprüche 1 bis 3, dadurch gekennzeichnet, daß die Lösung Kernbrennstoffe im gelösten Zustand enthält und aus dieser Lösung Pd, Ru, Rh, Tc, Co, Ni und Fe abgeschieden werden.

15. Verfahren gemäß einem der Ansprüche 1 bis 14, dadurch gekennzeichnet, daß das mit der Lösung in Kontakt gebrachte Festharz anschließend in einer Waschlösung aufbereitet wird.

16. Verfahren gemäß Anspruch 15, dadurch gekennzeichnet, daß als Waschlösung Wasser, Salpetersäure in einer Konzentration zwischen 0,1 und 4 mol/l oder NH₄OH in einer Konzentration von 0,1 mol/l verwendet wird.

## Claims

1. Process for the separation of at least one element chosen from among Nb, Sb, Ce, Pr, actinides, except uranium, and elements of groups VIIb and VIII of the Periodic Classification of Elements present in an aqueous solution resulting from the reprocessing of spent nuclear fuels, characterized in that it consists of contacting said aqueous solution with a solid resin based on vinyl pyridine polymer or copolymer and separating from said solution the resin which has fixed the element or elements.

2. Process according to claim 1, characterized in that the resin is polyvinyl-4-pyridine crosslinked by divinyl benzene.

3. Process according to claim 1, characterized in that the aqueous solution is a nitric solution.

4. Process according to claim 3, characterized in that the nitric acid concentration of the aqueous solution is 10⁻⁷ to 4 mole/l.

5. Process according to any one of the claims 1 to 4, characterized in that the contact time between the aqueous solution and the solid resin is 1 min to 24h.

6. Process according to any one of the claims 1 to 5, characterized in that the resin quantity used is 10 to 500 g/l of aqueous solution.

7. Process according to any one of the claims 1 to 3, characterized in that the group VIII element is ruthenium.

8. Process according to claim 7, characterized in that the nitric acid concentration of the aqueous solution is at the most equal to 1 mole/l and in that contacting takes place for between 10 and 60 min.

9. Process according to claim 7, characterized in that Cl⁻ ions are added to the aqueous solution.

10. Process according to any one of the claims 1 to 3, characterized in that the group VIII element is rhodium and/or palladium.

11. Process according to claim 10, characterized in that the aqueous solution has a nitric acid concentration of 1 to 2 mole/l and in that contacting takes place for less than 10 min.

12. Process according to any one of the claims 1 to 3, characterized in that the aqueous solution is a medium or high activity effluent and from said effluent is separated ruthenium, niobium, antimony, manganese, cobalt, cerium, praseodymium, plutonium, curium and americium.

13. Process according to any one of the claims 1 to 3, cheracterized in that the aqueous solution is a concentrate of fission products and in that from said concentrate are separated Fe, Ni, Rh, Ru, Co and Tc.

14. Process according to any one of the claims 1 to 3, characterized in that the aqueous solution is a dissolving solution for spent nuclear fuels and in that separtion takes place from said solution of Pd, Ru, Rh, Tc, Co, Ni and Fe.

15. Process according to any one of the claims 1 to 14, characterized in that the solid resin is then regenerated by contacting it with a washing solution.

16. Process according to claim 15, characterized in that the washing solution is water, 0.1 to 4M nitric acid or 0.1M NH₄OH.
